# EUROPÄISCHE PATENTANMELDUNG

(11) **EP 1 343 128 A2**
(43) Veröffentlichungstag der Anmeldung: **10.09.2003**
(21) Anmeldenummer: 03003309.6
(22) Anmeldetag: 13.02.2003
(51) Int. Cl.: G08C 17/02

(54) **Verfahren zur Steuerung von Industrie- oder Baugeräten**

(30) Priorität: 06.03.2002 DE 10209965
(71) Anmelder: Integrated Electronic Systems !SYS Consulting GmbH, 75248 Ölbronn-Dürrn (DE)
(72) Erfinder: Bredow, Wolfgang, 75223 Niefern-Öschelbronn (DE); Burchard, Thomas, 75177 Pforzheim (DE); Haug, Thomas, 75248 Ölbronn (DE)
(74) Vertreter: Frank, Gerhard, Dipl.-Phys.

(57) **Zusammenfassung**

Ein Verfahren zur Fernsteuerung von mehreren Industrie-, Bau- oder Mobilhydraulikgeräten wie Krane, Laufkatzen o. ä. mittels n Fernsteuereinheiten (S1...Sn) weist den Fernsteuereinheiten k Konzentratoren (K1...Kk) zu, wobei die Zahl (k) der Konzentratoren geringer ist als die Anzahl (n) der Fernsteuereinheiten. Vorzugsweise ist nur ein gemeinsamer Konzentrator (K) vorgesehen. Der Konzentrator (K) versieht die Signale der Steuerkanäle mit einer geeigneten Adresse und sendet sie über ein gemeinsames Datennetz, beispielsweise das Stromversorgungsnetz (AC), an das Konezntrator (K) und Steuergeräte (ST1 ...STm) für die m Aggregate der zu steuernden Industriegeräte angeschlossen sind, wo ein Signal anhand seiner Adresse vom betroffenen Steuergerät erkannt und in das Steuersignal zur Betätigung des zugehörigen Aggregates umgesetzt wird.

## Beschreibung

Die Erfindung betrifft ein Verfahren zur Steuerung von mehreren, an das gleiche Stromversorgungsnetz angeschlossenen Industrie- oder Baugeräten oder Mobilhydraulikgeräte wie Kränen, Laufkatzen und ähnliches, mittels Funkfernsteuerung, gemäß dem Oberbegriff des Patentanspruchs 1.

Es ist grundsätzlich bekannt, eine Vielzahl von Industrie- oder Baugeräten wie Kräne, Laufkatzen oder ähnliches beispielsweise auf Baustellen oder in Werkshallen zur Montage von Industriegütern fernzusteuern, d.h., die jeweils bestimmenden Bewegungsabläufe durch Ansteuerung eines geeigneten Motors hinsichtlich Art, Dauer und Richtung vorzugeben. Hierbei ist in der Regel jedem Funkempfänger, der einem zu steuernden Aggregat eines Industrie- oder Baugerätes zugeordnet ist, ein entsprechender Sender zugeordnet, mit dem das betreffende Industriegerät dann bedient werden kann, wobei dafür Sorge getragen werden muss, dass die Steuerkanäle, die zur Übermittlung der Steuerbefehle dienen, hinsichtlich zumindest eines von den Empfängern unterscheidbaren Kriteriums voneinander unterschiedlich sind, beispielsweise der Funkfrequenz. Diese Lösung setzt für jedes zu steuernde Aggregat einen zugehörigen Funkempfänger voraus, was die Lösung aufwendig macht.

### Stand der Technik

Für den Heimbereich ist es bekannt (DE 197 45 210 A1) eine Vielzahl von Verbrauchern an eine Datenleitung anzuschließen und mittels einer ebenfalls mit der Datenleitung verbundenen Steuereinheit zu betätigen, z.B. um ein Fernsehgerät einzuschalten.

Für den Heimbereich ist es weiterhin bekannt (DE 28 00 472 C2), elektrische Verbraucher eines Haushalts, wie z.B. Beleuchtungseinrichtungen oder Geräte der Unterhaltungselektronik, dadurch zu steuern, dass ein gemeinsames Handgerät mit einer Fernsteuerverbindung einen gemeinsamen Empfänger ansteuert, der das erhaltene Fernsteuersignal über das Haushaltsstromnetz den jeweiligen Verbrauchern zugeordneten Einheiten zuleitet, die aus dem übermittelten Signal die entsprechende Schaltinformation für das Gerät, beispielsweise das Fernsehgerät, erzeugen und die Schaltfunktion durchführen. Die Einbeziehung des Wechselstrom-Netzes eines Haushalts zur Signalübermittlung ist auch für andere Anwendungen bekannt, beispielsweise zu Überwachungszwecken ("Babyphon") oder auch als Träger für Dateninformationen ("Internet aus der Steckdose").

### Darstellung der Erfindung

Aufgabe der Erfindung ist es, die Steuerungsfunktionen für außerhalb eines engeren Gebäudes befindliche Bau- und Industriegeräten, die von mehreren Bedienerpersonen mit Fernsteuersendern ferngesteuert werden, wesentlich zu vereinfachen.

Erfindungsgemäß wird diese Aufgabe gemäß dem kennzeichnenden Teil des Patentanspruchs 1 gelöst.

Der Grundgedanke der Erfindung besteht darin, die bisher unmittelbar von den einzelnen Fernsteuersendern zu den individuellen Empfängern bei den zugehörigen Aggregaten der Industrie- und Baugeräte verlaufende Datenkommunikation in einer geringeren Anzahl, vorzugsweise nur einem einzigen Gerät, im folgenden als Konzentrator bezeichnet, zu bündeln, der die Funktion der bisherigen Vielzahl von Empfängern ausübt, und der von einem der Fernsteuersender empfangene Information über ein geeignetes Kommunikationsnetz (Datenbus) weiterleitet. Bei dem zugehörigen zu steuernden Aggregat des jeweiligen Industriegerätes ist dann kein Fernsteuerempfänger mehr erforderlich, sondern im einfachsten Fall nur noch ein technisch weniger aufwendiges Steuergerät mit einem Decoder, der "sein" Steuersignal aus dem Datenbus herausfiltert und ein Steuersignal zur Ansteuerung des jeweiligen Motors des Aggregats gewinnt.

Im übertragenen Sinne dient der gemeinsame Konzentrator daher als eine Vermittlungsstelle zwischen einer bestimmten Anzahl von Fernsteuersendern einerseits und einer Anzahl von Decodern in den Steuergeräten der Aggregate der Industriegeräte andererseits.

Die hierdurch ermöglichten Einsparungen durch Weglassen individueller Funkempfänger können bei der Anwendung über größere Entfernungen' bei Nutzung des vorhandenen Stromversorgungsnetzes noch durch Minimierung der erforderlichen Kabellängen gesteigert werden.

Ein weiterer Vorteil des erfindungsgemäßen Ansatzes besteht darin, dass die den Aggregaten zugeordneten Steuergeräte bei Bedarf einfach auch mit einer Encodierungs-Funktion aus- oder aufgerüstet werden können, mit denen die Steuergeräte unterschiedlicher Industriegeräte miteinander ebenfalls über das Kommunikationsnetz kommunizieren können. Dies eröffnet überall dort besonders große Möglichkeiten, wo es auf die Abstimmung zweier oder mehrerer Aggregate zur Erzielung eines gemeinsamen Ergebnisses ankommt, wie beispielsweise den Transport eines Betonfertigteils mit Hilfe von zwei parallel laufenden Laufkatzen, die ihre Weglänge mittels Sensoren über das Kommunikationsnetz auf einfache Weise aufeinander abstimmen können und somit eine insgesamt präzise Führung des Betonfertigteils gewährleisten.

Ein anderer Anwendungsbereich dieser "Intern-Kommunikation" besteht in der Abstimmung von Bewegungsabläufen von Aggregaten, wie z.B. Kranauslegern oder Schwenkarmen, deren Arbeitsfeld sich überlappt. Durch Mitteilung der jeweiligen Position und Abgleichung kann beispielsweise sichergestellt werden, dass das Einfahren eines Kranarms in einen derartigen überlappenden Arbeitsbereich nur dann möglich ist, wenn sich in diesem Arbeitsbereich nicht der Kranarm eines parallel arbeitenden Krans befindet. Eine derartige Möglichkeit dient zur Erhöhung der Betriebssicherheit der gesamten Anlage.

Die Art der Datenübertragung bzw. Kommunikation über den Datenbus kann auf verschiedene, an sich bekannte Arten durchgeführt werden (z.B. über die Netzleitung des Stromnetzes), wobei zweckmäßigerweise das Kommunikationssystem vom gemeinsamen Konzentrator zu den Steuergeräten und das interne Kommunikationssystem zwischen den Steuergeräten untereinander aufeinander abgestimmt und optimiert werden kann.

### Kurze Beschreibung der Zeichnungen

Ein bevorzugtes Ausführungsbeispiel der erfindungsgemäßen Lösung wird nun anhand von Zeichnungen näher erläutert, es zeigen:
- Figur 1:: Ein Blockschaltbild einer Anordnung zur Durchführung des erfindungsgemäßen Verfahrens, und
- Figur 2:: die Anordnung der Komponenten im Umfeld von Industriegeräten.

### Beschreibung des Ausführunqsbeispiels

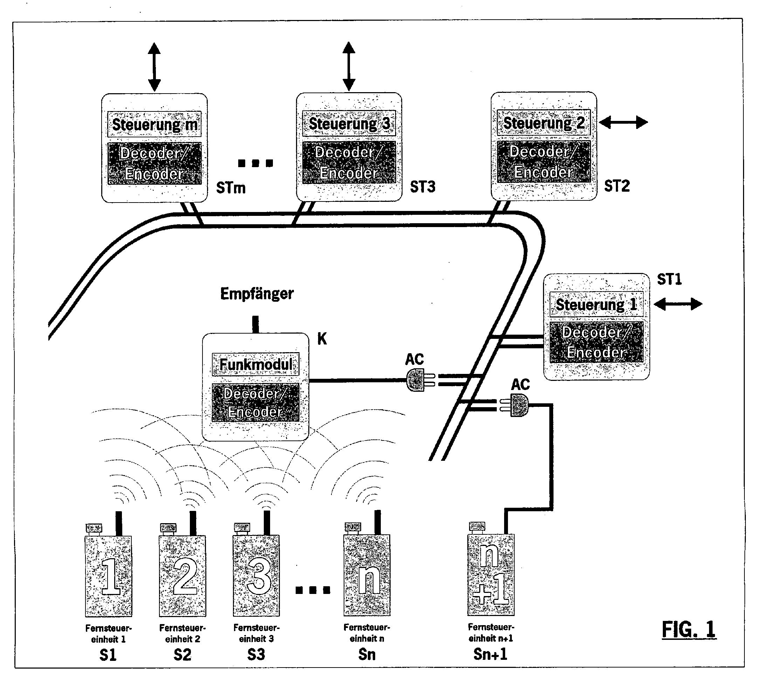

Figur 1 zeigt n Fernsteuereinheiten S1...Sn, deren Signale von einem Konzentrator K decodiert werden, wobei insbesondere auch die Information gewonnen wird, für welches Steuergerät ST1...STm von m zu steuernden Aggregaten der Gesamtanlage die betreffende Information bestimmt ist.

Der Konzentrator K vereint hierbei als Schalt- oder Vermittlungsstelle sowohl Einrichtungen zum Empfang und zur Dekodierung der Signale der Fernsteuereinheiten S1...Sn, als auch Einrichtungen zur Kodierung dieser Signale und Einspeisung in ein Datennetz (Datenbus).

Falls eine bidirektionale Kommunikation zwischen den Fernsteuereinheiten S1...Sn und dem Konzentrator K gewünscht wird (Rückkanal), müssen auch die hierfür erforderlichen Sende-Einrichtungen im Konzentrator K und Empfangseinrichtungen in den Fernsteuereinheiten S1...Sn vorhanden sein.

Die n Fernsteuereinheiten S1...Sn arbeiten auf n unterscheidbaren Sendekanälen, wobei die Unterscheidung in üblicher Weise beispielsweise durch eine unterschiedliche Frequenz oder auch durch verschiedene Pausenlängen zwischen übermittelten Datenpaketen definierbar und vom Konzentrator decodierbar ist.

Der Konzentrator K ist mit einem Datennetz verbunden, beim dargestellten Ausführungsbeispiel mit dem Stromnetz AC (beispielsweise 380 V Wechselstrom), ebenso wie die m Steuergeräte ST1...STm, die in der unmittelbaren Nähe jeweils eines zu steuernden Aggregates (beispielsweise eines Motors M) des Industrie- oder Baugerätes oder eines Mobilhydraulikgeräts angebracht sind. Jedes Steuergerät ST1...STm verfügt über einen Decoder, der auf den im Konzentrator K enthaltenen Encoder derart abgestimmt ist, dass eine vom Konzentrator K codierte Information für das Steuergerät STm eines bestimmten Aggregats (Motor M) von diesem decodiert wird und in ein zur Steuerung des Aggregates m geeignetes Steuersignal umgesetzt werden kann.

Gemäß einer vorteilhaften Ausgestaltung sind die m Steuergeräte ST1...STm auch mit einem Encoder ausgestattet, dessen Funktion im wesentlichen der Funktion des Encoders im Konzentrator K entspricht, so dass es dadurch möglich ist, auch zwischen den Steuergeräten untereinander Informationen auszutauschen, wie dies in der Einleitung erwähnt ist.

Als vorteilhafte Ergänzung lässt sich eine Steuereinheit Sn+1 in dieses System integrieren, die die Verbindung zum Stromnetz AC nicht über eine Funkverbindung herstellt, sondern unmittelbar an dieses angeschlossen ist, es muss dann gewährleistet sein, dass diese Steuereinheit Sn+1 ebenfalls über eine entsprechende Encodierungsmöglichkeit verfügt.

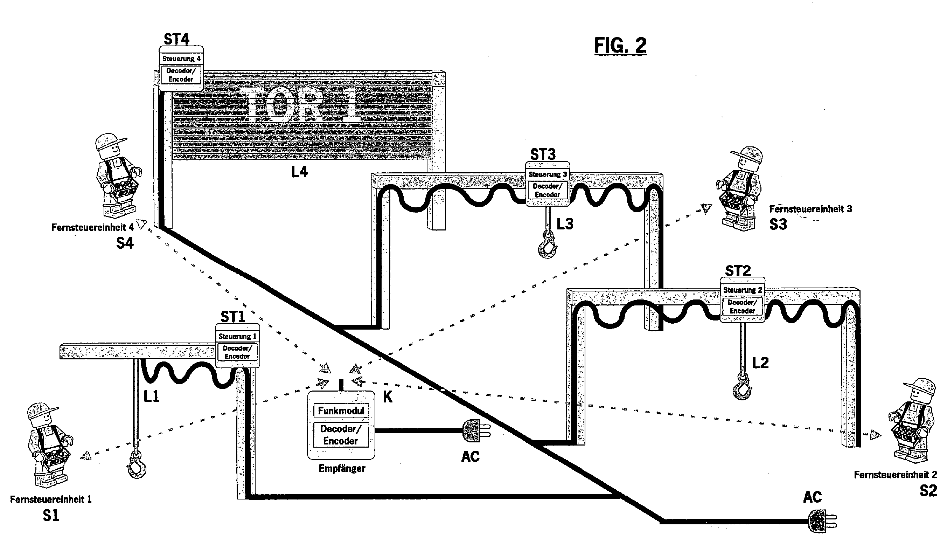

Figur 2 zeigt ein konkretes Anwendungsbeispiel des erfindungsgemäßen Verfahrens mit Industriegeräten, die in einem räumlich einander zugeordneten Arbeitsbereich angeordnet sind, nämlich drei Laufkatzen L1,L2 und L3 und einem Rolltor R in einer Fertigungs- oder Montagehalle. Diese 4 Geräte werden von vier Fernsteuereinheiten S1 ...S4 über den Konzentrator K und das Stromnetz AC gesteuert. Hierbei kann jede beliebige Zuordnung von Fernsteuereinheit S1...Sn und zu steuerndem Aggregat m vorgegeben werden.

Die Kommunikation in diesem System über eine als Datenbus funktionierende Netzleitung des Stromnetzes AC ist in ihren Grundzügen ("Telegramm" mit Adressen- und Informationsteil) bekannt, und soll anhand von zwei Diagrammen exemplarisch erläutert werden:

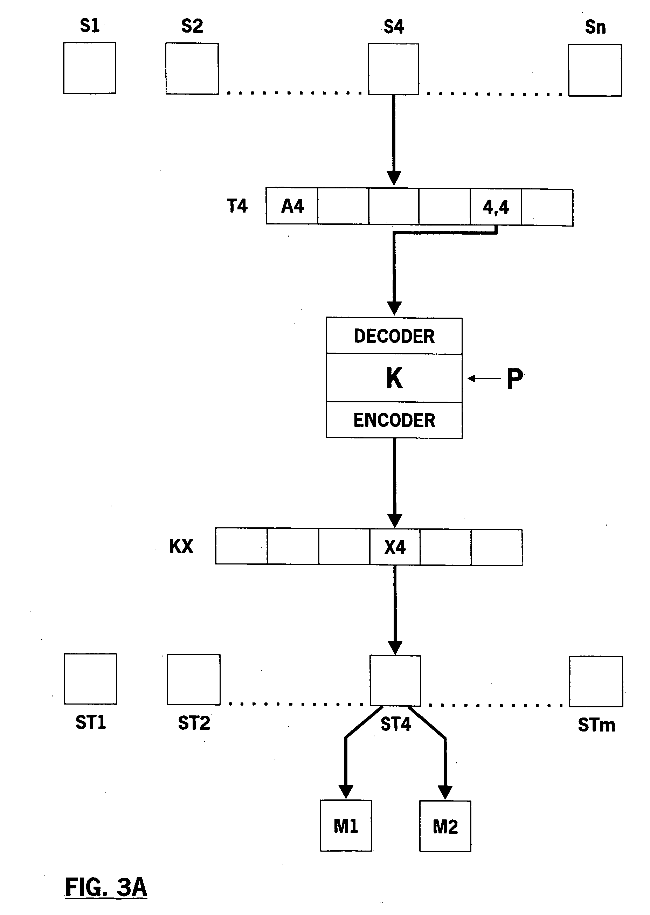

Figur 3A zeigt die Informationsübermittlung, wenn mit der Fernsteuereinheit S4 über das Steuergerät ST4 der Motor M1 beispielsweise eines Kran-Hebezeugs an einem Kran betätigt werden soll: Die Information der Fernsteuereinheit S4 belegt in einem im folgenden als Telegramm T4 bezeichneten Datenpaket den vierten Platz 4.4. Im Konzentrator wird die Adresse A4 der Fernsteuereinheit S4 identifiziert und ggf. geprüft, ob die Fernsteuereinheit S4 zur Ansteuerung des Steuergeräts ST4 autorisiert ist, d.h., ob die Adresse des angesprochenen Steuergeräts der Fernsteuereinheit zugewiesen wurde. Die zu vermittelnde Information wird dann vom Konzentrator mittels gespeicherter Zuordnungsfunktionen (die über einen Programmiereingang P definiert und geändert werden können) in ein Telegramm KX an einen dem Steuergerät ST4 zugeteilten Platz X4 umgesetzt und über das Datennetz versendet. Der Decoder des Steuergeräts ST4 erkennt die Information und erzeugt aus ihr ein Steuersignal für den Motor M1.

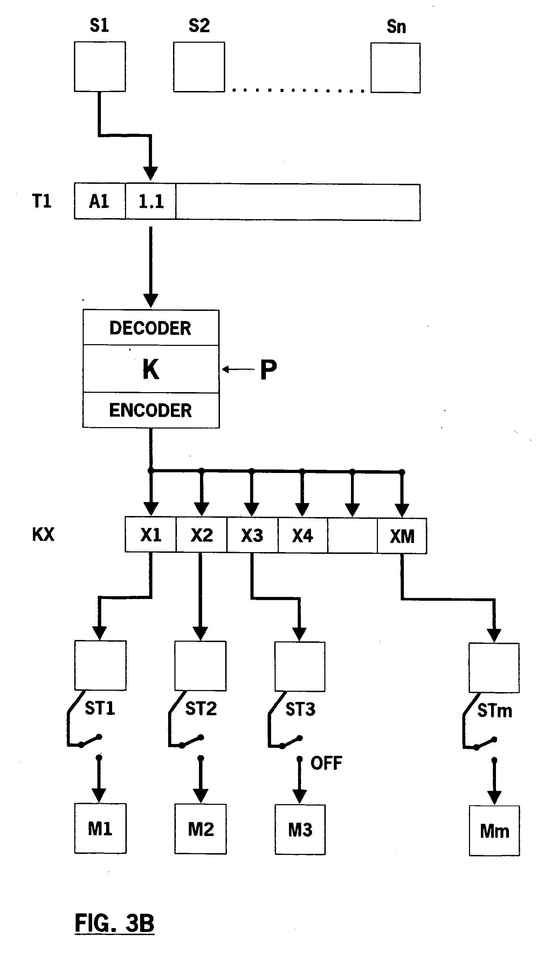

Figur 3B zeigt die Informationsübermittlung, wenn mit der Fernsteuereinheit S1 ein Not-Aus-Signal für alle Aggregate m der Gesamtanlage (beispielsweise der Maschinen in einer Montagehalle) übermittelt werden soll: In einem Telegramm T1 belegt diese Information den ersten Abschnitt 1.n. Der Konzentrator enthält in seinem Speicher als Zuordnungsfunktion die "Not-Aus-Zuordnung", aufgrund derer er eine im ersten Abschnitt eines Datentelegramms erhaltene Information im Telegramm KX in eine Not-Aus-Information in allen Kanälen X1...XM, d.h. für alle Steuergeräte ST1....STm umsetzt. Diese Information wird von allen Steuergeräten erkannt und umgesetzt, was zum Abschalten aller Aggregate M1...Mm führt, was symbolisch durch die offenen Schalter dargestellt sein soll.

## Patentansprüche

1. Verfahren zur Fernsteuerung von mehreren Industrie- oder Baugeräten wie Krane, Laufkatzen u.ä., bei dem jedem zu steuernden Industriegerät ein Steuerkanal zugeordnet wird, dessen Signal in ein Steuersignal zur Betätigung eines von m Aggregaten der m Industriegeräte umgesetzt wird,
**dadurch gekennzeichnet, dass** n Fernsteuereinheiten (S1...Sn) k Konzentratoren (K1...Kk) zugeordnet sind, wobei die Zahl (k) der Konzentratoren geringer ist als die Anzahl (n) der Fernsteuereinheiten, und dass die Konzentratoren die Signale der Steuerkanäle mit einer Adresse versehen und über ein gemeinsames Datennetz, an das die Konzentratoren ( K1...Kk) und die Steuergeräte (ST1...STm) für die m Aggregate der zu steuernden Industriegeräte angeschlossen sind, zur Verfügung stellen, wo ein Signal anhand seiner Adresse erkannt und in das Steuersignal zur Betätigung des zugehörigen Aggregates umgesetzt wird.

2. Verfahren nach Anspruch 1, **dadurch gekennzeichnet, dass** ein gemeinsamer Konzentrator (K) vorgesehen ist (k=1).

3. Verfahren nach Anspruch 1, **dadurch gekennzeichnet, dass** Steuerinformationen zwischen den Steuergeräten (ST1...STm) mehrerer Industriegeräte ebenfalls über das gemeinsame Datennetz ausgetauscht werden, wobei die Art der vom Konzentrator (K) benutzte Adressierung verwendet wird.

4. Verfahren nach Anspruch 1 bis 3, **dadurch gekennzeichnet, dass** den Steuerinformationen eine Absenderangabe zur Identifikation des Konzentrators (K) und der Steuergeräte (ST1...STm) hinzugefügt wird.

5. Verfahren nach Anspruch 1, **dadurch gekennzeichnet, dass** die Adresse eines Steuergeräts (ST1...STm) vom Konzentrator (K) jeweils nur einem der Fernsteuereinheiten (S1...Sn) zugeteilt wird.

6. Verfahren nach Anspruch 1, **dadurch gekennzeichnet, dass** die Fernsteuereinheiten (S1...Sn) auf einer Festfrequenz des Konzentrators (K) arbeiten und dass jedem Steuerkanal eine andere Pausenlänge zwischen den von ihm an den Konzentrator gesandten Datentelegrammen zugewiesen wird.

7. Verfahren nach Anspruch 1, **dadurch gekennzeichnet, dass** den Steuerkanälen der Fernsteuereinheiten (S1...Sn) unterschiedliche Frequenzen zugewiesen sind, die vom Konzentrator (K) zyklisch abgefragt werden.

8. Verfahren nach Anspruch 1, **dadurch gekennzeichnet, dass** die Adresse eines Steuergeräts (ST1...STm) vom Konzentrator mehreren Fernsteuersendern (S1... Sn) zugeteilt wird.

9. Verfahren nach Anspruch 1, **dadurch gekennzeichnet, dass** die Adresse einer Fernsteuereinheit (S1...Sn) und Teile der von ihm abgegebenen Informationen innerhalb des Telegramms unterschiedlichen Steuergeräten (ST1...STm) zugeteilt wird.

10. Verfahren nach Anspruch 1, **dadurch gekennzeichnet, dass** das Datennetz das Stromversorgungsnetz (AC) ist.

11. Verfahren nach Anspruch 10, **dadurch gekennzeichnet, dass** die Kommunikation der Dekoder/Enkoder von Konzentrator (K) und Steuergeräten (ST1...STm) auf einem Standardprotokoll (z.B. CAN-Bus) übertragen wird.

12. Verfahren nach Anspruch 1, **dadurch gekennzeichnet, dass** das Datennetz ein Gleichstrombordnetz (DC) ist.

13. Verfahren nach Anspruch 1, **dadurch gekennzeichnet, dass** die Kommunikation zwischen Fernsteuereinheiten (S1...Sn) und Konzentrator (K) bidirektional ist.
